# EUROPEAN PATENT APPLICATION

(11) **EP 3 975 526 A1**
(43) Date of publication of application: **30.03.2022**
(21) Application number: 20831692.7
(22) Date of filing: 20.05.2020
(51) Int. Cl.: H04M 1/02

(54) **MOBILE TERMINAL AND HOUSING THEREOF**

(30) Priority: 24.06.2019 CN 201910546650
(71) Applicant: GUANGDONG OPPO MOBILE TELECOMMUNICATIONS CORP., LTD., Wusha, Chang'an Dongguan Guangdong 523860 (CN)
(72) Inventor: WU, Yongqiang, Dongguan, Guangdong 523860 (CN); LI, Jing, Dongguan, Guangdong 523860 (CN)
(74) Representative: Thorniley, Peter
(86) International application number: PCT/CN2020/091250
(87) International publication number: WO 2020/259136

(57) **Abstract**

A mobile terminal and a housing (100a) thereof. The housing (100a) comprises a transparent body (11) and an insert (12); the transparent body (11) comprises a flat plate portion (111) and a side portion (112) which are connected; the side portion (112) is located at the edge of the flat plate portion (111); the side portion (112) is provided with a first through hole (11a); the insert (12) is applied over the inner surface (102) of the transparent body (11), and the insert (12) is provided with a second through hole (12a); the first through hole (11a) is in communication with the second through hole (12a); and the light transmittance of the insert (12) is less than the light transmittance of the transparent body (11).

## Description

### FIELD OF DISCLOSURE

The present disclosure relates to the field of mobile terminal technologies, in particular to a mobile terminal and a housing thereof.

### BACKGROUND

As consumers pursue an overall appearance quality of mobile terminals such as mobile phones, it is particularly important to improve the appearance quality of a housing that occupies a larger portion of an outer surface of the mobile terminal. At present, some housings are designed as transparent structures, showing better luster. However, the housing with this transparent structure has some problems. For example, the transparent housing is provided with holes corresponding to earphone holes, button holes, or charging ports. Light from a sidewall of the hole passes through the transparent housing to cause bright spots on a surface of the housing, thereby affecting the overall appearance quality of the housing and the mobile terminal.

### SUMMARY OF DISCLOSURE

Based on this, it is necessary to provide a housing and a mobile terminal.

In one aspect, the present disclosure provides a housing. The housing includes a transparent body and an engaging element, the transparent body includes a flat plate portion and a side portion that are connected to each other, the side portion is disposed at an edge of the flat plate portion, the side portion is provided with a first through hole, the engaging element is disposed on an inner surface of the transparent body, the engaging element is provided with a second through hole, the first through hole is communicated with the second through hole, and a light transmittance of the engaging element is less than a light transmittance of the transparent body.

In another aspect, the present disclosure provides a housing. The housing includes a transparent body and an engaging element, the transparent body includes a flat plate portion and a side portion that are connected to each other, the side portion is provided with a first through hole, the engaging element is connected to the transparent body, the engaging element is provided with a second through hole, the first through hole is communicated with the second through hole, and a light transmittance of the engaging element is less than a light transmittance of the transparent body.

In another aspect, the present disclosure provides a mobile terminal, including a display screen and the aforementioned housing, and the display screen is connected to the housing.

### BRIEF DESCRIPTION OF DRAWINGS

In order to describe the technical solutions in embodiments of the present disclosure or a conventional art more clearly, the drawings required to be used for descriptions about the embodiments or the conventional art will be simply introduced below. It is apparent that the drawings described below are only some embodiments of the present disclosure. Those of ordinary skill in the art may further obtain other drawings according to these drawings without creative efforts.
FIG. 1 is a three-dimensional view of a mobile terminal of an embodiment.
FIG. 2 is a schematic diagram of a housing of a mobile terminal of an embodiment.
FIG. 3 is a partial cross-sectional view of the housing shown in FIG. 2 along a line I-I.
FIG. 4 is a schematic diagram of a cooperation between a transparent body and an engaging element in the housing shown in FIG. 3.
FIG. 5 is a schematic diagram of a transparent body in a housing of a mobile terminal of an embodiment.
FIG. 6 is a schematic diagram of an engaging element in a housing of a mobile terminal of an embodiment.
FIG. 7 is a partial cross-sectional view of the housing shown in FIG. 5.
FIG. 8 is a schematic diagram showing orthographic projections of an inner wall of a first through hole and a light-shielding layer on a second reference plane in a housing of an embodiment.
FIG. 9 is a schematic diagram showing orthographic projections of an inner wall of a first through hole and a light-shielding layer on a second reference plane in a housing of another embodiment.

### DETAILED DESCRIPTION

For conveniently understanding the present disclosure, the present disclosure will be described below more comprehensively with reference to related drawings. The preferred embodiments of the present disclosure are shown in the drawings. However, the present disclosure may be implemented in many different forms and is not limited to the embodiments described herein. Instead, these embodiments are provided to make the contents disclosed in the present disclosure more thoroughly and comprehensively.

A "terminal device" used here includes, but not limited to, a device connected in any one or more of the following connection manners and capable of receiving and/or sending a communication signal:
(1) a wired connection manner, for example, a Public Switched Telephone Network (PSTN), a Digital Subscriber Line (DSL), a digital cable, and a direct cable connection; and
(2) a wireless interface manner, for example, a cellular network, a Wireless Local Area Network (WLAN), a digital television network like a Digital Video Broadcasting Handheld (DVB-H) network, a satellite network, and an Amplitude Modulation (AM)-Frequency Modulation (FM) broadcast transmitter.

A terminal device is configured to communicate by a wireless interface may be called a "mobile terminal". Examples of the mobile terminal include, but not limited to, the following electronic devices:
(1) a satellite phone or a cell phone;
(2) a Personal Communication System (PCS) terminal capable of integrating a cellular radio phone and data processing, faxing, and data communication capabilities;
(3) a radio phone, a pager, Internet/intranet access, a Web browser, a memo pad, a calendar, and a Personal Digital Assistant (PDA) equipped with a Global Positioning System (GPS) receiver;
(4) a conventional laptop and/or palmtop receiver, and
(5) a conventional laptop and/or palmtop radio phone transceiver and the like.

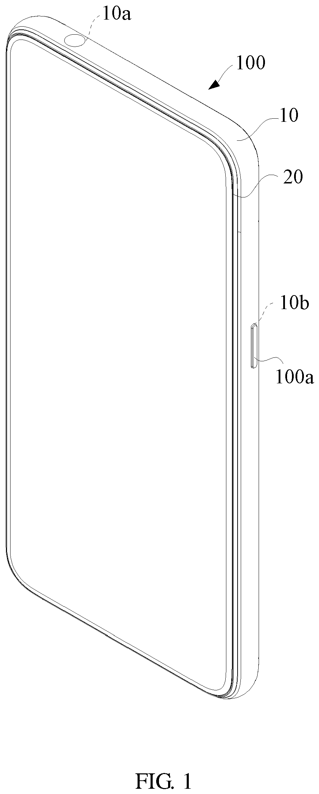

Referring to FIG. 1, in one embodiment, a mobile terminal 100 is provided. The mobile terminal 100 may be a smart phone, a computer, or an IPAD, etc., which is not limited herein.

The mobile terminal 100 in this embodiment will be described with a mobile phone as an example. The mobile terminal100 includes a housing 10 and a display screen 20. The housing 10 can be used to install the display screen 20 and accommodate a battery, a motherboard, and other electronic components of the mobile terminal 100. In the mobile terminal 100 as shown in FIG. 1, after the display screen 20 is installed in the housing 10, an edge of the display screen 20 is substantially integrated with an edge of the housing 10.

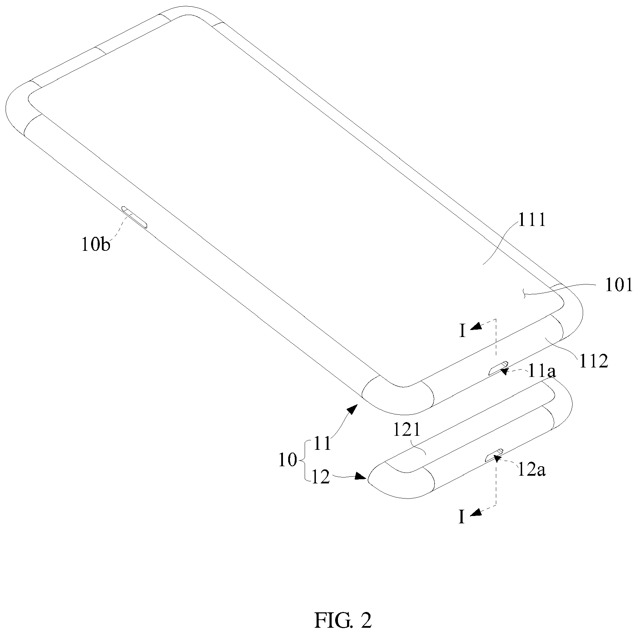

As shown in FIG. 2, the housing 10 includes a transparent body 11 and an engaging element 12.

The transparent body 11 includes a flat plate portion 111 and a side portion 112 connected to each other. The side portion 112 is disposed at an edge of the flat plate portion 111. The side portion 112 is provided with a first through hole 11a, and the first through hole 11a may be a hole on the housing 10 for a corresponding functional structure of the mobile terminal 100 to be exposed. For example, the first through hole 11a shown in FIG. 2 may be a USB interface hole through which a charging or data transmission interface of the mobile terminal 100 is exposed.

In other embodiments, for example, the first through hole 11a shown in FIG. 1 may also be an earphone hole 10a of the mobile terminal 100. For another example, as shown in FIG. 1 and FIG. 2, the first through hole 11a may also be a button hole 10b on the housing 10 corresponding to a button 100a of the mobile terminal 100. The type of the first through hole 11a is not limited here.

For the convenience of description, only the charging or data transmission interface of the mobile terminal 100 corresponding to the first through hole 11a shown in FIG. 2 is taken as an example to further describe the structure of the housing 10.

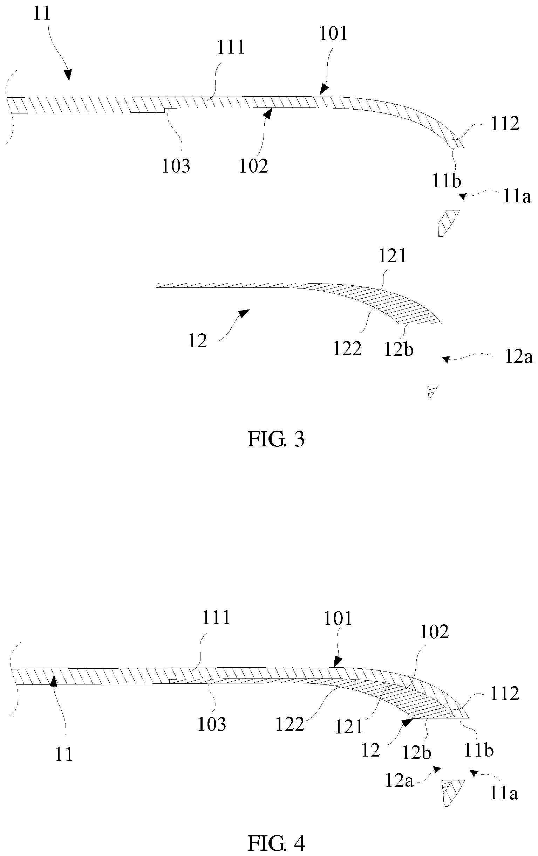

As shown in FIG. 3 and FIG. 4, the transparent body 11 includes an outer surface 101 and an inner surface 102. The outer surface 101 and the inner surface 102 are arranged opposite to each other. The inner surface 102 refers to a surface that is not visible when the housing 10 is assembled in the mobile terminal 100. Correspondingly, the outer surface 101 is a surface of the housing 10 facing away from the mobile terminal 100. The outer surface 101 constitutes a part of a surface of the mobile terminal 100.

Material of the transparent body 11 may be a transparent resin or a plastic. In other embodiments, the material of the transparent body 11 is selected from transparent polycarbonate materials, transparent acrylic materials, or other transparent materials with excellent light transmission properties.

Referring to FIG. 4, the engaging element 12 is disposed on the inner surface 102 of the transparent body 11, and the engaging element 12 is provided with a second through hole 12a. The first through hole 11a is communicated with the second through hole 12a, and they together form a charging hole, an earphone hole, or another functional hole of the mobile terminal 100. A light transmittance of the engaging element 12 is less than a light transmittance of the transparent body 11. That is, under a same ambient light, a transmittance of the light in the engaging element 12 is lower than a transmittance of the light in the transparent body 11. Therefore, when viewed from a side of the outer surface 101, since the light transmittance of the engaging element 12 is less than that of the transparent body 11, it is difficult for light to be reflected or refracted by a sidewall 12b of the second through hole 12a to cause bright spots, so as to prevent the bright spots from affecting an overall aesthetic appearance of the housing 10. Since the transparent body 11 with the larger light transmittance is disposed outside the engaging element 12, the transparent body 11 with the better light transmittance is employed to provide a glittering and translucent effect to enhance the overall aesthetic appearance of the housing 10.

In addition, under this configuration, when the first through hole 11a and the second through hole 12a meet depth requirements of the functional hole, the second through hole 12a of the engaging element 11 with the smaller light transmittance is used to reduce a depth of the first through hole 11a on the side portion 112 of the transparent body 11 as much as possible. Therefore, an area of a sidewall 11b of the first through hole 11a is reduced, and the bright spots caused by the reflection or refraction of the sidewall 11b of the first through hole 11a are effectively reduced, thereby enhancing the overall aesthetic appearance of the housing 10.

Referring to FIG. 4, the sidewall 11b of the first through hole 11a and the sidewall 12b of the second through hole 12a are smoothly connected, so that the functional hole formed by the first through hole 11a and the second through hole 12a has a better integrity.

As shown in FIG. 3 and FIG. 4, the engaging element 12 includes a first surface 121 and a second surface 122, and the first surface 121 and the second surface 122 are arranged opposite to each other. The first surface 121 is opposite to the inner surface 102 of the transparent body 11, the second through hole 12a extends through the first surface 121 and the second surface 122, and a depth of the second through hole 12a is greater than a depth of the first through hole 11a. That is, a wall thickness of the second through hole 12a in an opening direction is greater than a wall thickness of the first through hole 11a in the opening direction such that the wall thickness of the first through hole 11a is as small as possible to reduce bright spots. The second through hole 12a with the larger wall thickness can meet requirements of the depth of the functional hole.

A distance between the first surface 121 and the second surface 122 defines a thickness of the engaging element 12.

As shown in FIG. 4, in some embodiments, the thickness of the engaging element 12 gradually increases in a direction in which the flat plate portion 111 extends to the side portion 112, so that a wall thickness of the engaging element 12 has a sufficiently thickness at a position where the second through hole 12a is formed, and a portion corresponding to the engaging element 12 and the flat plate portion 111 is as thin as possible, so the mobile terminal 100 using the housing 10 may be made thinner and lighter in a thickness direction. Correspondingly, the position corresponding to the engaging element 12 and the side portion 112 is thicker. Thus, when the housing 10 maintains a certain wall thickness, the more the wall thickness of the housing 10 is shared by the engaging element 12 at the side portion 112, the thinner the side portion 112 where the first through hole 11a is formed can be made. A damage to the overall aesthetic appearance of the housing 10 caused by the light reflected or refracted by the sidewall 11b of the first through hole 11a is reduced.

It should be noted that in other embodiments, the thickness of the engaging element 12 is uniform. Under this configuration, when the engaging element 12 is connected to the transparent body 11, it can provide a more coordinated support effect to the transparent body 11 everywhere. Also, the design of the engaging element 12 with the same thickness is simpler, which is convenient for processing and manufacturing.

The transparent body 11 can be formed by injection molding, or processed by CNC to remove excess material.

In some embodiments, the engaging element 12 is integrally molded on the transparent body 11 by injection molding. Under this configuration, the engaging element 12 and the transparent body 11 do not need to be connected by a connector. Moreover, a bonding force between the engaging element 12 and the transparent body 11 that are integrally formed by injection molding is stronger, and an overall strength of the housing 10 is better.

In other embodiments, the engaging element 12 may also be adhered to the transparent body 11 through an adhesive layer. In this way, the engaging element 12 and the transparent body 11 can be formed in advance, so that when the engaging element 12 is assembled to the transparent body 11 to form the housing 10, a streamlining operation can be performed to improve a processing efficiency.

In other embodiments, the engaging element 12 may also be connected to the transparent body 11 by hot melting. It should be noted that the hot-melt connection is an efficient and stable connection method between non-metal and non-metal. After one of connected objects is heated to a melting point to form a liquid state, it is bonded to the other connected object.

Specifically, when the engaging element 12 is connected to the transparent body 11 by hot melting, the transparent body 11 can be formed first, and then material of the engaging element 12 can be formed into a molten liquid state. The engaging element 12 is formed on the transparent body 11 through a mold, so that the engaging element 12 and the transparent body 11 are stably assembled together.

In some embodiments, the housing 10 can be made in various colors such as red, blue, or green. For example, the inner surface 102 of the transparent body 11 is covered with a decorative layer. A pattern or color on the decorative layer can be seen through the transparent body 11 to form a better decorative performance.

A color of the decorative layer is consistent with a color of the engaging element12, so that when the decorative layer is used to provide decorative effects, such as colors or patterns, to the housing 10, the color presented by the engaging element12 through the transparent body 11 is integrated with the color of the decorative layer, thereby making the housing 10 having a better integrity.

In some embodiments, the decorative layer is an ink decorative layer. For example, through a screen-printing process, an ink is transferred to the inner surface 102 of the transparent body 11 to form the ink decorative layer. The screen-printing process is to form a screen with preset characters or patterns through means of screen-printing, pad-printing, transfer, or printing, and then transfer the ink to the transparent body 11 through processes such as ink application and pressure. The decorative layer formed by the ink can also achieve a better decorative performance. For example, using different colors of ink to form a colorful decorative layer. Alternatively, a single color ink is used to form an ink layer with a relatively uniform color. For example, the color of the ink layer is red, black, or green.

In other embodiments, the decorative layer is formed by coating the inner surface 102 of the transparent body 11 with an opaque material. The opaque material can be silicon titanium, niobium, tin, indium, or aluminum oxide. When using the opaque material to form the decorative layer, the opaque material can be attached to the inner surface 102 of the transparent body 11 in the form of coating, or the opaque material can be coated on the inner surface 102 of the transparent body 11 in the form of spraying.

As shown in FIG. 3 and FIG. 4, a recessed area 103 is formed on a side of the inner surface 102 of the transparent body 11. A partial structure of the engaging element 12 is embedded in the recessed area 103. Theus, the recessed area 103 is used to provide a certain accommodation space for the engaging element 12, thereby facilitating the thinning of the housing 10. Moreover, under this structure setting, the engaging element 12 is embedded in the recessed area 103, which can also improve the bonding force between the engaging element 12 and the transparent body 11, thereby enhancing the structural strength of the housing 10.

In some embodiments, an entire structure of the engaging element 12 is embedded in the recessed area 103, which can also improve the structural strength between the engaging element 12 and the transparent body 11. Moreover, the entire structure of the engaging element 12 is embedded in the recessed area103. The engaging element 12 on the inner surface 102 of the transparent body 11 does not appear awkward, which makes the housing 10 having a better integrity.

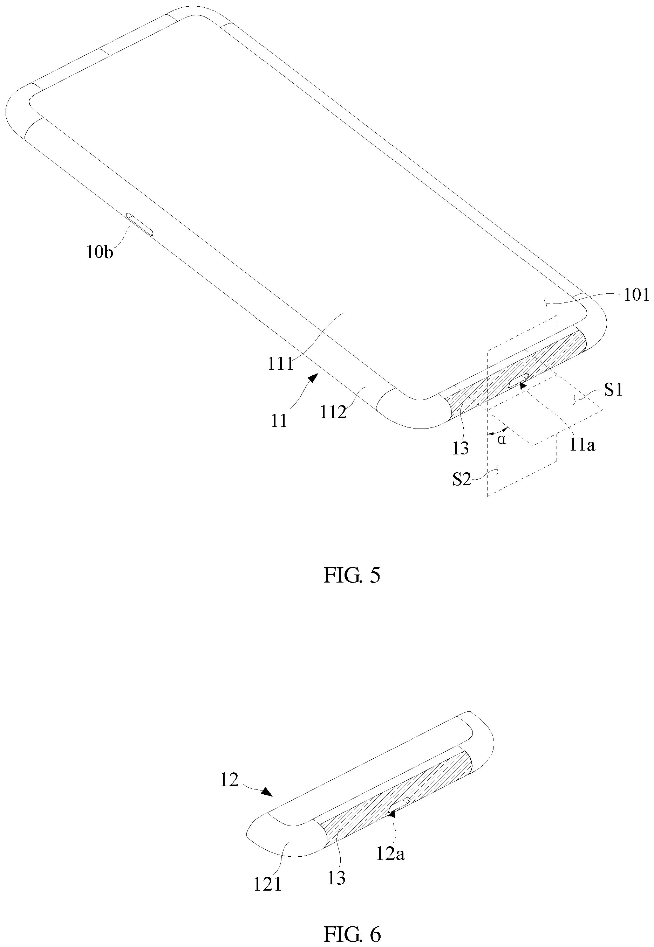

As shown in FIG. 5, the outer surface 101 of the transparent body 11 is covered with a light-shielding layer 13. The light-shielding layer 13 is connected to the sidewall 11b of the first through hole 11a. Specifically, the light-shielding layer 13 extends along the outer surface 101 and is connected to the sidewall 11b of the first through hole 11a. To facilitate the definition of the arrangement of the light-shielding layer 13 and the sidewall 11b of the first through hole 11a, FIG. 2 schematically shows a first virtual plane (i.e., a reference plane S1). The reference plane S1 is a geometric plane parallel to the flat plate portion 111. An orthographic projection area of the sidewall 11b of the first through hole 11a on the reference plane S1 is within an orthographic projection area of the light-shielding layer 13 on the reference plane S1. In other words, the orthographic projection area of the light-shielding layer 13 on the reference plane S1 can cover and shield the orthographic projection area of the sidewall 11b of the first through hole 11a on the reference plane S 1.

It should be noted that when the housing 10 is installed in the mobile terminal 100, a geometric plane perpendicular to a thickness direction of the mobile terminal 100 can also be defined as the first reference plane. An arrangement of the light-shielding layer 13 also satisfies this condition: the orthographic projection area of the sidewall 11b of the first through hole 11a on the reference plane S1 is within the orthographic projection area of the light-shielding layer 13 on the reference plane S1.

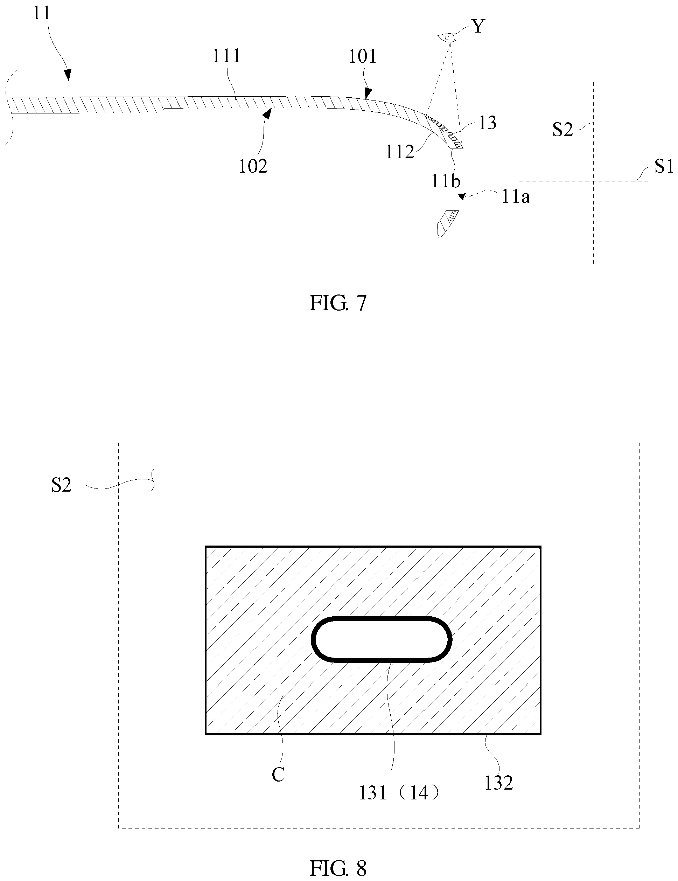

In the above embodiment, the light-shielding layer 13 on the outer surface 101 of the transparent body 11 is used to block light. Specifically, since the orthographic projection area of the light-shielding layer 13 on the reference plane S1 covers the orthographic projection area of the sidewall 11b of the first through hole 11a on the reference plane S1, a part of the transparent body 11 covered with the light-shielding layer 13 no longer has optical transparency or has extremely low light transmittance. Thus, the sidewall 11b of the first through hole 11a cannot be viewed through the partial structure covered by the light-shielding layer 13 of the transparent body 11, which prevents that light from the sidewall 11b of the first through hole 11a passes through the transparent body 11, thereby affecting an overall visual experience of the housing 10. For example, referring to FIG. 7, when viewing at an observation point Y, due to the shielding of the light-shielding layer 13, an external light cannot pass through the partial structure of the transparent body 11 covered with the light-shielding layer 13 and enter the sidewall 11b of the first through hole 11a. Furthermore, the sidewall 11b of the first through hole 11a will not cause bright spots, and the sidewall 11b of the first through hole 11a is invisible or has low visibility, so that an influence on the overall visual experience of the housing 10 can be ignored.

A range of the light-shielding layer 13 covering the transparent body 11 can be determine as required, as long as it can shield the sidewall 11b of the first through hole 11a. As in some embodiments, the light-shielding layer 13 can completely shield the sidewall 11b of the first through hole 11a on the side of the outer surface 101. That is, the sidewall 11b of the first through hole 11a is not visible from the outer surface 101 of the housing 10.

It should be pointed out that the sidewall 11b of the first through hole 11a that is not visible from the outer surface 101 of the housing 10 means that when the observation point Y is located on the side of the outer surface 101 of the housing 10, the sidewall 11b of the first through hole 11a cannot be seen from the side of the outer surface 101, no matter it is through the partial structure of the transparent body 11 covered by the light-shielding layer 13 or through the partial structure of the transparent body 11 that is not covered by the light-shielding layer 13. In this setting, the part of the transparent body 11 that is not covered by the light-shielding layer 13 may be due to an accumulation of the material of the transparent body 11 along a propagation path of the light path, which reduces the light transmittance. As a result, light from the sidewall 11b of the first through hole 11a cannot be viewed through the transparent body 11, or is weak and insufficient to be observed by the naked eye.

In one of the embodiments, as shown in FIG. 7, the entire structure of the light-shielding layer 13 is covered on the side portion 112, so as to prevent the sidewall 11b of the first through hole 11a from being visible through the part of the outer surface 101 corresponding to the sidewall 11b.

In other embodiments, one partial structure of the light-shielding layer 13 is covered on the flat plate portion 111, and the other partial structure is covered on the side portion 112, so as to improve a shielding ability of the light-shielding layer 13 on the sidewall 11b of the first through hole 11a.

Specifically, since the partial structure of the light-shielding layer 13 is covered on the flat plate portion 111, a light path of the light from the side wall 11b of the first through hole 11a passing through the flat plate portion 111 that is not shielded by the light-shielding layer 13 of the transparent body 11 is extended. It reduces a possibility of the light from the sidewall 11b of the first through hole 11a leaking from the flat plate portion 111, and a seethrough effect of the side wall 11b of the first through hole 11a on the outer surface 101 of the transparent body 11 is prevented, which may damage the overall appearance quality of the housing 10. In addition, a certain texture or color can be formed through the light-shielding layer 13 to achieve a better decorative performance and further improve the overall appearance quality of the housing 10.

As shown in FIG. 5 and FIG. 7, a second reference plane S2 is defined by a geometric plane perpendicular to an opening direction of the first through hole 11a. It should be noted that the opening direction of the first through hole11a refers to a depth direction of the first through hole 11a when the first through hole11a is formed in the housing 10. For the hollow first through hole 11a, the opening direction can also be considered to be an axial direction along the first through hole 11a. Specifically, the first through hole 11a extends through the outer surface 101 and the inner surface 102 along the opening direction.

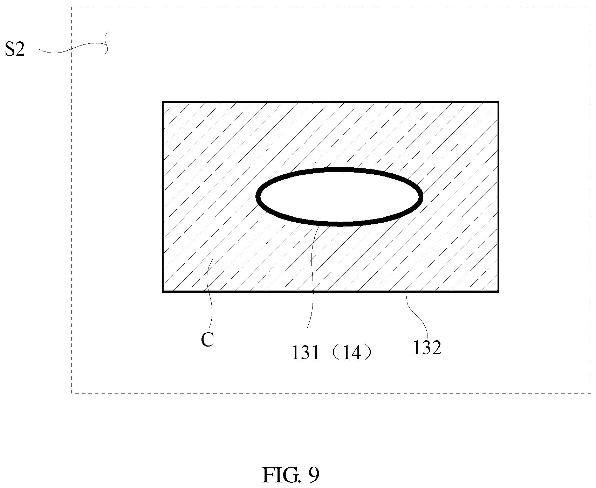

As shown in FIG. 8 and FIG. 9, an orthographic projection of the sidewall 11 b of the first through hole 11a on the second reference plane S2 defines a first outline 14. A figure enclosed by the first outline 14 is the same as a cross-sectional shape of the sidewall 11b of the first through hole 11a in the opening direction. An orthographic projection of the light-shielding layer 13 on the second reference plane S2 defines a ring-shaped area. The ring-shaped area has an inner edge 131 and an outer edge 132. The inner edge 131 coincides with the first outline 14. The inner edge 131 is disposed in an area enclosed by the outer edge 132.

As shown in FIG. 8, in some embodiments, a shape enclosed by the inner edge 131 is an oblong shape, and a shape enclosed by the outer edge 132 is a rectangle. As shown in FIG. 9, in other embodiments, the shape enclosed by the inner edge 131 is an ellipse, and the shape enclosed by the outer edge 132 is a rectangle. The first through hole 11a serves as a hole in the housing 10 for a functional structure of the mobile terminal 100 to be exposed, and its shape can be set according to actual needs. For example, when the first through hole 11a is used as an earphone hole, the shape enclosed by the first outline 14 is a circle, and correspondingly, a cross section of the first through hole 11a is a circle.

In some embodiments, the shape enclosed by the outer edge 132 is a rectangle, an oblong or an ellipse, and presents different shapes to coordinate with the overall appearance of the housing 10. The shape enclosed by the outer edge 132 is not limited here.

As shown in FIG. 5, an angle α between the reference plane S1 and the second reference plane S2 ranges from 85° to 95°. Since the opening direction of the first through hole 11a is perpendicular to the second reference plane S2, the outer surface 101 of the flat plate portion 111 is parallel to the reference plane S1. Thus, the angle α between the reference plane S1 and the second reference plane S2 ranges from 85° to 95°. It means that an inclination angle of the opening direction of the first through hole 11a relative to the flat plate portion 111 is controlled within an angle range of -5° to 5°. The extending direction of the first through hole 11a is substantially parallel to the inner surface 102 of the flat plate portion 111.

Furthermore, the reference plane S1 and the second reference plane S2 are perpendicular to each other, that is, the angle α is 90°. Correspondingly, the extending direction of the first through hole 11a is parallel to the inner surface 102 of the flat plate portion 111.

As shown in FIG. 6, in some embodiments, the engaging element 12 may also adopt a structure in which, for example, the outer surface 101 of the transparent body 11 is covered with the light-shielding layer 13.

Specifically, a side of the engaging element 12 facing the inner surface 102 is covered with the light-shielding layer 13. The light-shielding layer 13 is connected to the sidewall 12b of the second through hole 12a. A structure of the light-shielding layer 13 on the engaging element 12 can refer to the structure of the light-shielding layer 13 of the transparent body 11, which will not be repeated here.

In this embodiment, the light-shielding layer 13 can be used to shield the sidewall 12b of the second through hole 12a. That is, even if the light transmittance of the engaging element 12 is not enough to completely prevent the light from entering the sidewall 12b of the second through hole 12a, the light-shielding layer 13 can effectively prevent the light reflected or refracted from the sidewall 12b of the second through hole 12a to cause bright spots. Therefore, the structure of the light-shielding layer 13 is adopted to prevent the functional hole of the housing 10 from causing bright spots, so as to enhance the overall aesthetic appearance of the housing 10.

It should be noted that in some embodiments, both the transparent body 11 and the engaging element 12 are covered with the light-shielding layer 13 to improve the shading effect on the functional hole of the housing 10 and prevent the functional hole of the housing 10 from causing bright spots, thereby enhance the structural integrity of the housing 10.

In some embodiments, the display screen 20 may adopt a liquid crystal display (LCD) screen for displaying information. The LCD screen can be a thin film transistor (TFT) screen, an in-plane switching (IPS) screen, or a splice liquid crystal display (SLCD) screen.

In other embodiments, the display screen 20 may use an organic light-emitting diode (OLED) screen for displaying information. The OLED screen may be an active matrix organic light emitting diode (AMOLED) screen, and a super active matrix organic light emitting diode (Super AMOLED) screen, or a super active matrix organic light emitting diode plus (Super AMOLED Plus) screen, which will not be described here.

Each technical characteristic of the embodiments may be freely combined, and for brief description, not all possible combinations of each technical characteristic in the embodiments are described. However, all the combinations of these technical characteristics shall fall within the scope recorded in the specification without conflicts.

The embodiments only express some implementation modes of the present disclosure, and relatively specific and detailed descriptions are made thereto but should not thus be understood as limits to the scope of the patent present disclosure. It is to be pointed out that those of ordinary skill in the art may further make a plurality of transformations and improvements without departing from the concept of the present disclosure and all of them fall within the scope of protection of the present disclosure. Therefore, the scope of protection of the patent present disclosure shall be subject to the appended claims.

## Claims

1. A housing, **characterized in that**, the housing comprises a transparent body and an engaging element, the transparent body comprises a flat plate portion and a side portion that are connected to each other, the side portion is disposed at an edge of the flat plate portion, the side portion is provided with a first through hole, the engaging element is disposed on an inner surface of the transparent body, the engaging element is provided with a second through hole, the first through hole is communicated with the second through hole, and a light transmittance of the engaging element is less than a light transmittance of the transparent body.

2. The housing according to claim 1, **characterized in that**, a sidewall of the first through hole and a sidewall of the second through hole are smoothly connected.

3. The housing according to claim 1, **characterized in that**, the engaging element comprises a first surface and a second surface, the first surface and the second surface are disposed opposite to each other, the first surface is opposite to the inner surface of the transparent body, the second through hole extends through the first surface and the second surface, and a depth of the second through hole is greater than a depth of the first through hole.

4. The housing according to claim 3, **characterized in that**, a distance between the first surface and the second surface defines a thickness of the engaging element, the thickness of the engaging element is uniform, or the thickness of the engaging element gradually increases in a direction in which the flat plate portion extends to the side portion.

5. The housing according to claim 1, **characterized in that**, the engaging element is integrally molded with the transparent body by injection molding, or the engaging element is adhered to the transparent body through an adhesive layer, or the engaging element is connected to the transparent body by hot melting.

6. The housing according to claim 1, **characterized in that**, the inner surface of the transparent body is covered with a decorative layer, and a color of the decorative layer is consistent with a color of the engaging element.

7. The housing according to claim 6, **characterized in that**, the decorative layer is an ink decorative layer, or the decorative layer is formed by coating the inner surface of the transparent body with an opaque material.

8. The housing according to any one of claims 1-7, **characterized in that**, a recessed area is formed on one side of the inner surface of the transparent body, and a partial structure of the engaging element is embedded in the recessed area, or an entire structure of the engaging element is embedded in the recessed area.

9. The housing according to claim 1, **characterized in that**, an outer surface of the transparent body is covered with a light-shielding layer, the light-shielding layer is connected to a sidewall of the first through hole, an orthographic projection area of the sidewall of the first through hole on a reference plane is within an orthographic projection area of the light-shielding layer on the reference plane, wherein the reference plane is a geometric plane parallel to the flat plate portion.

10. The housing according to claim 1 or claim 9, **characterized in that**, a side of the engaging element facing the inner surface of the transparent body is covered with a light-shielding layer, the light-shielding layer is connected to a sidewall of the second through hole, an orthographic projection area of the sidewall of the second through hole on a reference plane is within an orthographic projection area of the light-shielding layer on the reference plane, wherein the reference plane is a geometric plane parallel to the flat plate portion .

11. A housing, **characterized in that**, the housing comprises a transparent body and an engaging element, the transparent body comprises a flat plate portion and a side portion that are connected to each other, the side portion is provided with a first through hole, the engaging element is connected to the transparent body, the engaging element is provided with a second through hole, the first through hole is communicated with the second through hole, and a light transmittance of the engaging element is less than a light transmittance of the transparent body.

12. The housing according to claim 11, **characterized in that**, a sidewall of the first through hole and a sidewall of the second through hole are smoothly connected.

13. The housing according to claim 11, **characterized in that**, a depth of the second through hole is greater than a depth of the first through hole.

14. The housing according to claim 11, **characterized in that**, the engaging element comprises a first surface and a second surface, the first surface and the second surface are disposed opposite to each other, the first surface is opposite to an inner surface of the transparent body, the second through hole extends through the first surface and the second surface; a thickness of the engaging element is uniform, or the thickness of the engaging element gradually increases in a direction in which the flat plate portion extends to the side portion; and a distance between the first surface and the second surface defines the thickness of the engaging element.

15. The housing according to claim 11, **characterized in that**, the engaging element is integrally molded with the transparent body by injection molding, or the engaging element is adhered to the transparent body through an adhesive layer, or the engaging element is connected to the transparent body by hot melting.

16. The housing according to claim 11, **characterized in that**, an inner surface of the transparent body is covered with a decorative layer, and a color of the decorative layer is consistent with a color of the engaging element.

17. The housing according to claim 16, **characterized in that**, the decorative layer is an ink decorative layer, or the decorative layer is formed by coating the inner surface of the transparent body with an opaque material.

18. The housing according to any one of claims 11-17, **characterized in that**, a recessed area is formed on one side of the inner surface of the transparent body, and a partial structure of the engaging element is embedded in the recessed area, or an entire structure of the engaging element is embedded in the recessed area.

19. The housing according to claim 11, **characterized in that**, an outer surface of the transparent body is covered with a light-shielding layer, the light-shielding layer is connected to a sidewall of the first through hole, an orthographic projection area of the sidewall of the first through hole on a reference plane is within an orthographic projection area of the light-shielding layer on the reference plane, wherein the reference plane is a geometric plane parallel to the flat plate portion.

20. The housing according to claim 11, **characterized in that**, a side of the engaging element facing an inner surface of the transparent body is covered with a light-shielding layer, the light-shielding layer is connected to a sidewall of the second through hole, an orthographic projection area of the sidewall of the second through hole on a reference plane is within an orthographic projection area of the light-shielding layer on the reference plane, wherein the reference plane is a geometric plane parallel to the flat plate portion .

21. A mobile terminal, **characterized in that**, the mobile terminal comprises a display screen and the housing according to any one of claims 1-20, and the display screen is connected to the housing.
